(19) Europäisches Patentamt
European Patent Office
Office européen des brevets

(11) **EP 3 842 497 A1**

(12) **EUROPEAN PATENT APPLICATION**
published in accordance with Art. 153(4) EPC

(43) Date of publication:
**30.06.2021 Bulletin 2021/26**

(21) Application number: **19852243.5**

(22) Date of filing: **23.08.2019**

(51) Int Cl.:
*C08L 77/06* (2006.01)  *C08G 69/26* (2006.01)
*C08K 3/013* (2018.01)  *C08K 3/34* (2006.01)
*C08K 7/06* (2006.01)  *C08K 7/14* (2006.01)

(86) International application number:
**PCT/JP2019/033004**

(87) International publication number:
**WO 2020/040283 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **24.08.2018  JP 2018157350**
**26.06.2019  JP 2019119067**

(71) Applicant: **Kuraray Co., Ltd.**
**Kurashiki-shi, Okayama 710-0801 (JP)**

(72) Inventors:
• **NANYA, Atsushi**
  **Tsukuba-shi, Ibaraki 305-0841 (JP)**
• **SEKIGUCHI, Kenji**
  **Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **POLYAMIDE COMPOSITION**

(57) The present invention relates to a polyamide composition containing a polyamide (A) having a dicarboxylic acid unit and a diamine unit and an inorganic filler (B), wherein more than 40 mol% and 100 mol% or less of the dicarboxylic acid unit is a naphthalenedicarboxylic acid unit; and 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.

EP 3 842 497 A1

**Description**

Technical Field

The present invention relates to a polyamide composition, etc. In more detail, the present invention relates to a polyamide composition containing a semi-aromatic polyamide having a dicarboxylic acid unit composed mainly of a naphthalenedicarboxylic acid unit and a diamine unit composed mainly of an aliphatic diamine unit and an inorganic filler, etc.

Background Art

Semi-aromatic polyamides using an aromatic dicarboxylic acid, such as terephthalic acid, and an aliphatic diamine, and crystalline polyamides represented by nylon 6, nylon 66, etc. are widely used as fibers for clothes or for industrial materials, general-purpose engineering plastics, etc. because of their excellent characteristics and easiness of melt molding. Meanwhile, as for such crystalline polyamides, there are pointed out problems, such as insufficient heat resistance and defective dimensional stability due to water absorption. In particular, in recent years, resinification of engine room parts is eagerly investigated for the purpose of improvement of fuel efficiency of automobiles, and polyamides which are more excellent in high-temperature strength, heat resistance, dimensional stability, mechanical characteristics, and physicochemical characteristics than the conventional polyamides are demanded.

As the polyamide having excellent heat resistance, for example, PTL 1 discloses a semi-aromatic polyamide obtained from 2,6-naphthalenedicarboxylic acid and a linear aliphatic diamine having 9 to 13 carbon atoms. In PTL 1, it is described that the foregoing semi-aromatic polyamide is also excellent in chemical resistance and mechanical characteristics, etc. in addition to the heat resistance. Meanwhile, in PTL 1, it is described that the use of an aliphatic diamine having a side chain is not preferred due to a lowering of crystallinity of the resulting polyamide, or the like.

PTL 2 discloses a polyamide in which 60 to 100 mol% of a dicarboxylic acid unit is composed of a 2,6-naphthalenedicarboxylic acid unit, 60 to 100 mol% of a diamine unit is composed of a 1,9-nonanediamine unit and a 2-methyl-1,8-octanediamine unit, and a molar ratio of the 1,9-nonanediamine unit to the 2-methyl-1,8-octanediamine unit is 60/40 to 99/1. In PTL 2, it is described that the foregoing polyamide is excellent in mechanical characteristics, resistance to thermal decomposition, low water-absorbing properties, and chemical resistance, etc. in addition to heat resistance.

Furthermore, there are also disclosed resin compositions containing a semi-aromatic polyamide, applications of a semi-aromatic polyamide, and so on (for example, see PTLs 3 and 4).

Citation List

Patent Literature

PTL 1: JP 50-67393 A
PTL 2: JP 9-12715 A
PTL 3: WO 2012/098840 A
PTL 4: WO 2005/102681 A

Summary of Invention

Technical Problem

As mentioned above, the conventional polyamides of PTLs 1 and 2 and so on have physical properties, such as heat resistance, mechanical characteristics, low water-absorbing properties, and chemical resistance; however, more improvements of these physical properties are demanded.

In PTL 2, it is described that 1,9-nonanediamine and 2-methyl-1,8-octanediamine are used in combination as the aliphatic diamine; however, a polyamide in a region where the ratio of 2-methyl-1,8-octanediamine having a side chain is high is not mentioned at all.

Then, a problem of the present invention is to provide a polyamide composition which is more excellent in various physical properties including high-temperature strength, heat resistance, and chemical resistance; and a molded article made of the same.

Solution to Problem

The present inventors made extensive and intensive investigations. As a result, they have found that the aforementioned problem can be solved by a polyamide composition containing a specified polyamide having a dicarboxylic acid unit composed mainly of a naphthalenedicarboxylic acid unit and a diamine unit composed mainly of a branched aliphatic diamine unit and an inorganic filler, and further made investigations on the basis of the foregoing findings, thereby leading to accomplishment of the present invention.

Specifically, the present invention is as follows.

[1] A polyamide composition containing a polyamide (A) having a dicarboxylic acid unit and a diamine unit and an inorganic filler (B), wherein
more than 40 mol% and 100 mol% or less of the dicarboxylic acid unit is a naphthalenedicarboxylic acid unit; and
60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.

[2] A molded article made of the polyamide composition.

Advantageous Effects of Invention

In accordance with the present invention, it is possible to provide a polyamide composition which is more excellent in various physical properties including high-temperature strength, heat resistance, and chemical resistance; and a molded article made of the same.

Brief Description of Drawing

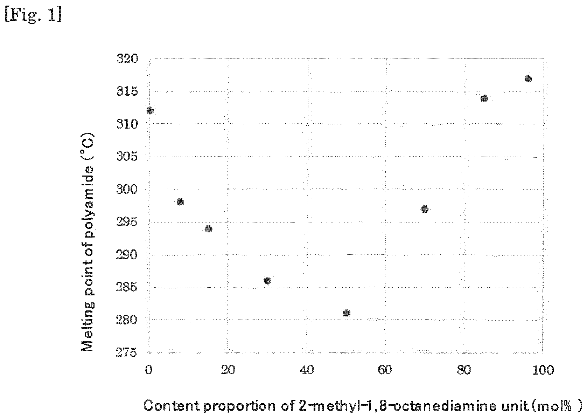

Fig. 1 is a graph in which with respect to a polyamide in which the dicarboxylic acid unit is a 2,6-naphthalenedicarboxylic acid unit, and the diamine unit is a 1,9-nonanediamine unit and/or a 2-methyl-1,8-octanediamine unit, a melting point (°C) of the polyamide is plotted versus a content proportion (mol%) of the 2-methyl-1,8-octanediamine unit in the diamine unit.

Description of Embodiments

The present invention is hereunder described in detail. In this specification, a prescription that is considered to be preferred may be arbitrarily adopted, and it may be said that a combination of preferred prescriptions is more preferred. In this specification, the term "XX to YY" as referred to herein means "XX or more and YY or less".

<Polyamide Composition>

The polyamide composition of the present invention contains a polyamide (A) having a dicarboxylic acid unit and a diamine unit and an inorganic filler.

In this specification, the term "··· unit" (here, "···" expresses a monomer) means a "structural unit derived from ···", and for example, the "dicarboxylic acid unit" means the "structural unit derived from the dicarboxylic acid", and the "diamine unit" means the "structural unit derived from the diamine".

[Polyamide (A)]

The polyamide (A) which is contained in the polyamide composition of the present invention has a dicarboxylic acid unit and a diamine unit. More than 40 mol% and 100 mol% or less of the dicarboxylic acid unit is a naphthalenedicarboxylic acid unit. In addition, 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.

As mentioned above, in view of the fact that the polyamide (A) has the dicarboxylic acid unit composed mainly of a naphthalenedicarboxylic acid unit and the diamine unit composed mainly of a branched aliphatic diamine unit, it is more excellent in various physical properties including chemical resistance; and in the polyamide composition of the present invention containing the polyamide (A) and the inorganic filler, the aforementioned excellent properties are kept, and in addition thereto, excellent high-temperature strength and heat resistance are revealed. In addition, various molded articles obtained from the foregoing polyamide composition are able to hold the excellent properties of the foregoing polyamide composition.

In general, physical properties which a polyamide is able to have, such as high-temperature strength, mechanical characteristics, heat resistance, low water-absorbing properties, and chemical resistance, tend to become excellent as the crystallinity of the polyamide becomes high. In addition, among polyamides having a similar primary structure, as the crystallinity of the polyamide becomes high, a melting point of the polyamide also tends to become high. Here, with respect to the melting point of the polyamide, for example, when a polyamide in which the diamine unit is a 1,9-nonanediamine unit and/or a 2-methyl-1,8-octanediamine unit, and the dicarboxylic acid unit is a terephthalic acid unit is made by reference, in a graph representing a relation between a melting point (ordinate axis) of the polyamide and a composition of the diamine unit (content proportion of the 1,9-nonanediamine unit and the 2-methyl-1,8-octanediamine unit) (abscissa axis), a minimum portion is expressed. In the case of comparing melting points of both ends on the abscissa axis of the graph, namely a melting point A1 when the 1,9-nonanediamine unit of a linear structure is 100 mol% and a melting point B1 when the 2-methyl-1,8-octanediamine unit of a branched structure is 100 mol%, the melting point A1 is typically higher than the melting point B1 relying on the molecular structure of the diamine unit.

In contrast, in the case of a polyamide in which the diamine unit is a 1,9-nonanediamine unit and/or a 2-methyl-1,8-octanediamine unit, and the dicarboxylic acid unit is a 2,6-naphthalenedicarboxylic acid unit, in a graph having the same ordinate axis and abscissa axis as those mentioned above, a minimum portion is expressed, whereas in the case of comparing a melting point A2 when the 1,9-nonanediamine unit of the linear structure is 100 mol% and a melting point B2 when the 2-methyl-1,8-octanediamine unit of the branched structure is 100 mol%, it has been surprisingly noted that the melting point B2 becomes higher than the melting point A2.

Specifically, with respect to the polyamide in which the dicarboxylic acid unit is a 2,6-naphthalenedicarboxylic acid unit, and the diamine unit is a 1,9-nonanediamine unit and/or a 2-methyl-1,8-octanediamine unit, a graph in which a melting point (°C) of the polyamide is plotted versus a content proportion (mol%) of the 2-methyl-1,8-octanediamine unit in the diamine unit is shown in Fig. 1.

According to Fig. 1, it is noted that relative to the melting point of a polyamide in which the 2-methyl-1,8-octanediamine unit is 0 mol% (namely, the 1,9-nonanediamine unit is 100 mol%), the melting point of the polyamide is lowered with an increase of the content proportion of the 2-methyl-1,8-octanediamine unit. On the other hand, it is noted that from the vicinity where the content proportion of the 2-methyl-1,8-octanediamine unit exceeds 50 mol%, as the foregoing content proportion increases, the melting point of the polyamide greatly rises. In comparing the melting points near the both ends on the abscissa axis of Fig. 1, it is noted that the melting point when the content proportion of the 2-methyl-1,8-octanediamine unit of the branched structure is in the vicinity of 100 mol% is higher than the melting point when the content proportion of the 1,9-nonanediamine unit of the linear structure is 100 mol%. With respect to other portions than the vicinities of the both ends on the abscissa axis, in comparing melting points in left and right regions on the border of the vicinity where the content proportion of the 2-methyl-1,8-octanediamine unit is 50 mol%, it is noted that in the right-side region where the content proportion of the 2-methyl-1,8-octanediamine unit is high, the melting point tends to become higher than that in the left-side region where the content proportion of the 1,9-nonanediamine unit is high.

As mentioned above, it has been noted that as for the polyamide having the diamine unit composed mainly of a 1,9-nonanediamine unit and/or a 2-methyl-1,S-octanediamine unit, revelation of its physical properties varies with the dicarboxylic acid unit to be combined. The present inventors further made investigations. As a result, it has been found that in the case where the content proportion of the branched aliphatic diamine unit is higher than that of the linear aliphatic diamine unit, by adopting the naphthalenedicarboxylic acid unit as the dicarboxylic acid unit, various physical properties including chemical resistance are more improved, and furthermore, by containing an inorganic filler as mentioned later, excellent high-temperature strength and heat resistance are further revealed. Although the reason for this is not always elucidated yet, it may be conjectured that in the polyamide, the appropriate existence ratio of the branched structure in the diamine unit and the existence of a naphthalene structure in the dicarboxylic acid unit are mutually related to the properties.

(Dicarboxylic Acid Unit)

More than 40 mol% and 100 mol% or less of the dicarboxylic acid unit is the naphthalenedicarboxylic acid unit. When the content of the naphthalenedicarboxylic acid unit in the dicarboxylic acid unit is 40 mol% or less, it becomes difficult to reveal effects for improving various physical properties including chemical resistance of the polyamide composition and more excellent effects for high-temperature temperature and heat resistance due to the fact of containing the inorganic filler.

From the viewpoint of mechanical characteristics, heat resistance, and chemical resistance, etc., the content of the naphthalenedicarboxylic acid unit in the dicarboxylic acid unit is preferably 50 mol% or more, more preferably 60 mol% or more, still more preferably 70 mol% or more, yet still more preferably 80 mol% or more, even yet still more preferably 90 mol% or more, and especially preferably 100 mol%.

Examples of the naphthalenedicarboxylic acid unit include structural units derived from naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. These structural units may be contained alone or may be contained in combination of two or more thereof. Of the aforementioned naphthalenedicarboxylic acids, from the viewpoint of revelation of various physical properties including high-temperature strength, heat resistance, and chemical resistance of the polyamide composition and reactivity with the diamine, etc., 2,6-naphthalenedicarboxylic acid is preferred.

From the same viewpoint as that mentioned above, the content of the structural unit derived from 2,6-naphthalenedicarboxylic acid in the naphthalenedicarboxylic acid unit is preferably 90 mol% or more, and more preferably 95 mol% or more, and it is preferably close to 100 mol% as far as possible (substantially 100 mol%).

The dicarboxylic acid unit can contain a structural unit derived from other dicarboxylic acid than the naphthalenedicarboxylic acid within a range where the effects of the present invention are not impaired.

Examples of the other dicarboxylic acid include aliphatic dicarboxylic acids, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid; alicyclic dicarboxylic acids, such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and aromatic dicarboxylic acids, such as terephthalic acid, isophthalic acid, diphenic acid, 4,4'-biphenyldicarboxylic acid, diphenylmethane-4,4'-dicarboxylic acid, and diphenylsulfone-4,4'-dicarboxylic acid. The structural unit derived from such other dicarboxylic acid may be contained alone or may be contained in combination of two or more thereof.

The content of the structural unit derived from the aforementioned other dicarboxylic acid in the dicarboxylic acid unit is preferably 50 mol% or less, more preferably 40 mol% or less, still more preferably 30 mol% or less, yet still more preferably 20 mol% or less, and even yet still more preferably 10 mol% or less.

(Diamine Unit)

60 mol% or more and 100 mol% or less of the diamine unit is the branched aliphatic diamine unit and the linear aliphatic diamine unit of an arbitrary structural unit. That is, the diamine unit contains the branched aliphatic diamine unit and does not contain the linear aliphatic diamine unit; alternatively, the diamine unit contains both the branched aliphatic diamine unit and the linear aliphatic diamine unit, with a total content of the branched aliphatic diamine unit and the linear aliphatic diamine unit of an arbitrary structural unit in the diamine unit being 60 mol% or more and 100 mol% or less. When the total content of the branched aliphatic diamine unit and the linear aliphatic diamine unit in the diamine unit is less than 60 mol%, it becomes difficult to reveal the effect for improving various physical properties including high-temperature strength, heat resistance, and chemical resistance in the polyamide composition.

From the viewpoint of chemical resistance, mechanical characteristics, and heat resistance, etc., the total content of the branched aliphatic diamine unit and the linear aliphatic diamine unit in the diamine unit is preferably 70 mol% or more, more preferably 80 mol% or more, still more preferably 90 mol% or more, and especially preferably 100 mol%.

In this specification, the branched aliphatic diamine means an aliphatic diamine having a structure in which on the supposition of a linear aliphatic chain in which carbon atoms to which two amino groups to be contained are bound, respectively are the carbon atoms on the both ends, at least one hydrogen atom of the linear aliphatic chain (supposed aliphatic chain) is substituted with a branched chain. That is, for example, 1,2-propanediamine ($H_2N-CH(CH_3)-CH_2-NH_2$) is classified into the branched aliphatic diamine in this specification because it has a structure in which one of hydrogen atoms of the 1,2-ethylene group as the supposed aliphatic chain is substituted with a methyl group as the branched chain.

In the diamine unit, a proportion of the branched aliphatic diamine unit relative to the total 100 mol% of the branched aliphatic diamine unit and the linear aliphatic diamine unit is 60 mol% or more. When the proportion of the branched aliphatic diamine unit is less than 60 mol%, it becomes difficult to reveal the effect for improving various physical properties including high-temperature strength, heat resistance, and chemical resistance of the polyamide composition.

From the viewpoint of making it easy to improve various physical properties including high-temperature strength, heat resistance, and chemical resistance and improving moldability of the polyamide composition, etc., the proportion of the branched aliphatic diamine unit relative to the total 100 mol% of the branched aliphatic diamine unit and the linear aliphatic diamine unit is preferably 65 mol% or more, more preferably 70 mol% or more, still more preferably 72 mol% or more, yet still more preferably 77 mol% or more, and even yet still more preferably 80 mol% or more, and it may also be 90 mol% or more. Although the foregoing proportion may be 100 mol%, when moldability and availability of the diamine, etc. are taken into consideration, it is preferably 99 mol% or less, and it may also be 98 mol% or less, and further 95 mol% or less.

The carbon number of the branched aliphatic diamine unit is preferably 4 or more, more preferably 6 or more, and still more preferably 8 or more, and it is preferably 18 or less, and more preferably 12 or less. So long as the carbon number of the branched aliphatic diamine unit falls within the aforementioned range, the polymerization reaction between the dicarboxylic acid and the diamine proceeds favorably, the crystallinity of the polyamide (A) becomes favorable, and the physical properties of the polyamide composition containing the polyamide (A) are more readily improved. As one example of preferred embodiments of the carbon number of the branched aliphatic diamine unit, the carbon number may be 4 or more and 18 or less, may be 4 or more and 12 or less, may be 6 or more and 18 or less, may be 6 or more and 12 or less, may be 8 or more and 18 or less, or may be 8 or more and 12 or less.

The kind of the branched chain in the branched aliphatic diamine unit is not particularly restricted, and for example, it can be made an aliphatic group of every kind, such as a methyl group, an ethyl group, and a propyl group. However, the branched aliphatic diamine unit is preferably a structural unit derived from a diamine having at least one selected from the group consisting of a methyl group and an ethyl group as the branched chain. When the diamine having at least one selected from the group consisting of a methyl group and an ethyl group as the branched group is used, the polymerization reaction between the dicarboxylic acid and the diamine proceeds favorably, and the chemical resistance of the polyamide composition containing the polyamide (A) is more readily improved. From the foregoing viewpoint, the branched chain is more preferably a methyl group.

Although the number of branched chains which the branched aliphatic diamine forming the branched aliphatic diamine unit has is not particularly restricted, it is preferably 3 or less, more preferably 2 or less, and still more preferably 1 because, for example, the effects of the present invention are more remarkably brought.

As for the branched aliphatic diamine unit, when the carbon atom to which arbitrary one of the amino groups is bound is designated as the 1-position, it is preferably a structural unit derived from a diamine having at least one of the branched chains on at least one of the carbon atom at the 2-position adjacent thereto (carbon atom on the aforementioned supposed aliphatic chain) and the carbon atom at the 3-position adjacent to the carbon atom at the 2-position (carbon atom on the aforementioned supposed aliphatic chain), and more preferably a structural unit derived from a diamine having at least one of the branched chains on the aforementioned carbon atom at the 2-position. According to this, various physical properties including high-temperature resistance, heat resistance, and chemical resistance of the polyamide composition are more readily improved.

Examples of the branched aliphatic diamine unit include structural units derived from branched aliphatic diamines, such as 1,2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,4-diethyl-1,6-hexanediamine, 2,2,4-trimethyl-1,6-hexanediamine, 2,4,4-trimethyl-1,6-hexanediamine, 2-ethyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine. These structural units may be contained alone or may be contained in combination of two or more thereof.

Among the aforementioned branched aliphatic diamine units, from the viewpoint that the effects of the present invention are more remarkably brought, and availability of the raw materials is excellent, etc., a structural unit derived from at least one diamine selected from the group consisting of 2-methyl-1,5-pentanediamine, 3-methyl-1,5-pentanediamine, 2-methyl-1,8-octanediamine, and 2-methyl-1,9-nonanediamine is preferred, and a structural unit derived from 2-methyl-1,8-octanediamine is more preferred.

The carbon number of the linear aliphatic diamine unit is preferably 4 or more, more preferably 6 or more, and still more preferably 8 or more, and it is preferably 18 or less, and more preferably 12 or less. So long as the carbon number of the linear aliphatic diamine unit falls within the aforementioned range, the polymerization reaction between the dicarboxylic acid and the diamine proceeds favorably, the crystallinity of the polyamide becomes favorable, and the physical properties of the polyamide are more readily improved. As one example of preferred embodiments of the carbon number of the linear aliphatic diamine unit, the carbon number may be 4 or more and 18 or less, may be 4 or more and 12 or less, may be 6 or more and 18 or less, may be 6 or more and 12 or less, may be 8 or more and 18 or less, or may be 8 or more and 12 or less.

Although the carbon numbers of the linear aliphatic diamine unit and the branched aliphatic diamine unit may be the same as or different from each other, they are preferably the same as each other because the effects of the present invention are more remarkably brought.

Examples of the linear aliphatic diamine unit include structural units derived from linear aliphatic diamines, such as ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine. These structural units may be contained alone or may be contained in combination of two or more thereof.

Among the aforementioned linear aliphatic diamine units, from the viewpoint that the effects of the present invention are more remarkably brought, and in particular, the heat resistance of the resulting polyamide composition containing the polyamide (A) is improved, etc., a structural unit derived from at least one diamine selected from the group consisting of 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine is preferred, and a structural unit derived from 1,9-nonanediamine is more preferred.

The diamine unit can contain a structural unit derived from other diamine than the branched aliphatic diamine and the linear aliphatic diamine within a range where the effects of the present invention are not impaired. Examples of the other diamine include an alicyclic diamine and an aromatic diamine.

Examples of the alicyclic diamine include cyclohexanediamine, methylcyclohexanediamine, isophoronediamine, norbornane dimethylamine, and tricyclodecane dimethyldiamine.

Examples of the aromatic diamine include p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether.

These structural units derived from the other diamine may be contained alone or may be contained in combination of two or more thereof.

The content of the structural unit derived from the aforementioned other diamine in the diamine unit is preferably 30 mol% or less, more preferably 20 mol% or less, and still more preferably 10 mol% or less.

(Dicarboxylic Acid Unit and Diamine Unit)

A molar ratio [(dicarboxylic acid unit)/(diamine unit)] of the dicarboxylic acid unit to the diamine unit in the polyamide (A) is preferably 45/55 to 55/45. So long as the molar ratio of the dicarboxylic acid unit to the diamine unit falls within the aforementioned range, the polymerization reaction proceeds favorably, and the polyamide composition which is excellent in desired physical properties is readily obtained.

The molar ratio of the dicarboxylic acid unit to the diamine unit can be adjusted according to the blending ratio (molar ratio) of the raw material dicarboxylic acid and the raw material diamine.

A total proportion of the dicarboxylic acid unit and the diamine unit in the polyamide (A) (proportion occupied by the total molar number of the dicarboxylic acid unit and the diamine unit relative to the molar number of all structural units constituting the polyamide (A)) is preferably 70 mol% or more, more preferably 80 mol% or more, and still more preferably 90 mol% or more, and it may also be 95 mol% or more, and further 100 mol%. So long as the total proportion of the dicarboxylic acid unit and the diamine unit falls within the aforementioned range, the polyamide composition which is more excellent in desired physical properties is provided.

(Aminocarboxylic Acid Unit)

The polyamide (A) may further contain an aminocarboxylic acid unit in addition to the dicarboxylic acid unit and the diamine unit.

Examples of the aminocarboxylic acid unit include structural units derived from lactams, such as caprolactam and lauryl lactam; and aminocarboxylic acids, such as 11-aminoundecanoic acid and 12-aminododecanoic acid. The content of the aminocarboxylic acid unit in the polyamide (A) is preferably 40 mol% or less, and more preferably 20 mol% or less relative to the total 100 mol% of the dicarboxylic acid unit and the diamine unit each constituting the polyamide (A).

(Polyvalent Carboxylic Acid Unit)

So long as the effects of the present invention are not impaired, the polyamide (A) can also contain a structural unit derived from a trivalent or higher-valent polyvalent carboxylic acid, such as trimellitic acid, trimesic acid, and pyromellitic acid, within a range where it is possible to perform melt molding.

(End Capping Agent Unit)

The polyamide (A) may contain a structural unit derived from an end capping agent (end capping agent unit).

The content of the end capping agent unit is preferably 1.0 mol% or more, more preferably 1.2 mol% or more, and 1.5 mol% or more, and it is preferably 10 mol% or less, more preferably 7.5 mol% or less, and still more preferably 6.5 mol% or less, based on 100 mol% of the diamine unit. So long as the content of the end capping agent unit falls within the aforementioned range, the polyamide composition which is more excellent in mechanical strength and fluidity is provided. By appropriately adjusting the amount of the end capping agent on the occasion of charging the polymerization raw materials, the content of the end capping agent unit can be allowed to fall within the aforementioned desired range. Taking into consideration the fact that the monomer components volatilize during the polymerization, it is desired to make fine adjustments to the charge amount of the end capping agent such that the desired amount of the end capping agent unit is introduced into the resulting polyamide (A).

Examples of a method of determining the content of the end capping agent unit in the polyamide (A) include a method in which a solution viscosity is measured, the whole end group amount is calculated according to a relational expression thereof to a number average molecular weight, and the amino group amount and the carboxy group amount as determined through titration are subtracted therefrom, as described in JP 7-228690 A; and a method in which using $^1$H-NMR, the end capping agent unit in the polyamide (A) is determined on the basis of integrated values of signals corresponding to the diamine unit and the end capping agent unit, respectively, with the latter method being preferred.

As the end capping agent, a monofunctional compound having reactivity with the terminal amino group or the terminal carboxy group can be used. Specifically, examples thereof include a monocarboxylic acid, an acid anhydride, a monoisocyanate, a monoacid halide, a monoester, a monoalcohol, and a monoamine. From the viewpoint of reactivity and stability of the endcap, etc., a monocarboxylic acid is preferred as the end capping agent relative to the terminal amino group, and a monoamine is preferred as the end capping agent relative to the terminal carboxy group. From the viewpoint of easiness of handling, etc., a monocarboxylic acid is more preferred as the end capping agent.

The monocarboxylic acid which is used as the end capping agent is not particularly restricted so long as it has reactivity with the amino group. Examples thereof include aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids, such as cyclopentanecarboxylic acid and cyclohexanecarboxylic acid; aromatic monocarboxylic acids, such as benzoic acid, toluic acid, α-naphthalenecarboxylic acid, β-naphthalenecarboxylic acid, methylnaphthalenecarboxylic acid, and phenylacetic acid; and arbitrary mixtures thereof. Of these, from the standpoint of reactivity, stability of endcap, and price, etc., at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred.

The monoamine which is used as the end capping agent is not particularly restricted so long as it has reactivity with the carboxy group. Examples thereof include aliphatic monoamines, such as methylamine, ethylamine, propylamine, butylamine, hexylamine, octylamine, decylamine, stearylamine, dimethylamine, diethylamine, dipropylamine, and dibutylamine; alicyclic monoamines, such as cyclohexylamine and dicyclohexylamine; aromatic monoamines, such as aniline, toluidine, diphenylamine, and naphthylamine; and arbitrary mixtures thereof. Of these, from the standpoint of reactivity, high boiling point, stability of endcap, and price, etc., at least one selected from the group consisting of butylamine, hexylamine, octylamine, decylamine, stearylamine, cyclohexylamine, and aniline is preferred.

As for the polyamide (A), an inherent viscosity $[\eta_{inh}]$ thereof as measured by using concentrated sulfuric acid as a solvent in a concentration of 0.2 g/dL at a temperature of 30°C is preferably 0.1 dL/g or more, more preferably 0.4 dL/g or more, still more preferably 0.6 dL/g or more, and especially preferably 0.8 dL/g or more, and it is preferably 3.0 dL/g or less, more preferably 2.0 dL/g or less, and still more preferably 1.8 dL/g or less. So long as the inherent viscosity $[\eta_{inh}]$ of the polyamide (A) falls within the aforementioned range, the various physical properties, such as moldability, are more improved. The inherent viscosity $[\eta_{inh}]$ can be determined from a time of flow to (sec) of the solvent (concentrated sulfuric acid), a time of flow $t_1$ (sec) of the sample solution, and a sample concentration c (g/dL) in the sample solution (namely, 0.2 g/dL) according to a relational expression: $\eta_{inh} = [\ln(t_1/t_0)]/c$.

A melting point of the polyamide (A) is not particularly restricted, and for example, it can be 260°C or higher, 270°C or higher, and further 280°C or higher. From the standpoint that the effects of the present invention are more remarkably brought, etc., the melting point of the polyamide (A) is preferably 290°C or higher, more preferably 295°C or higher, still more preferably 300°C or higher, yet still more preferably 305°C or higher, and even yet still more preferably 310°C or higher, and it may also be 315°C or higher. Although an upper limit of the melting point of the polyamide (A) is not particularly restricted, taking into consideration moldability, etc., it is preferably 330°C or lower, more preferably 320°C or lower, and still more preferably 317°C or lower. The melting point of the polyamide (A) can be determined as a peak temperature of a melting peak appearing at the time of raising the temperature at a rate of 10°C/min by using a differential scanning calorimeter (DSC), and more specifically, it can be determined by the method described in the section of Examples.

A glass transition temperature of the polyamide (A) is not particularly restricted, and for example, it can be 100°C or higher, 110°C or higher, and further 120°C or higher. However, from the standpoint that the effects of the present invention are more remarkably brought, etc., the glass transition temperature of the polyamide (A) is preferably 125°C or higher, more preferably 130°C or higher, still more preferably 135°C or higher, yet still more preferably 137°C or higher, and even yet still more preferably 138°C or higher, and it may also be 139°C or higher. Although an upper limit of the glass transition temperature of the polyamide (A) is not particularly restricted, taking into consideration moldability, etc., it is preferably 180°C or lower, more preferably 160°C or lower, and still more preferably 150°C or lower. The glass transition temperature of the polyamide (A) can be determined as a temperature of an inflection point appearing at the time of raising the temperature at a rate of 20°C/min by using a differential scanning calorimeter (DSC), and more specifically, it can be determined by the method described in the section of Examples.

(Production Method of Polyamide (A))

The polyamide (A) can be produced by adopting an arbitrary method known as the method for producing a crystalline polyamide. For example, the polyamide (A) can be produced by a method, such as a melt phase polymerization method, a solid phase polymerization method, and a melt extrusion method, each using a dicarboxylic acid and a diamine as raw materials. Above all, from the viewpoint that the heat deterioration during polymerization can be more favorably inhibited, the production method of the polyamide (A) is preferably a solid phase polymerization method.

In order to allow a molar ratio of the branched aliphatic diamine unit to the linear aliphatic diamine unit to fall within the aforementioned specified numerical value range, the branched aliphatic diamine and the linear aliphatic diamine, each of which is used as the raw material, may be used in a blending ratio so as to satisfy the desired molar ratio of the aforementioned units.

In the case of using, for example, 2-methyl-1,8-octanediamine and 1,9-nonanediamine as the branched aliphatic diamine and the linear aliphatic diamine, respectively, these can be each produced by a known method. Examples of the known method include a method of distilling a diamine crude reaction solution obtained through a reductive amination reaction using a dialdehyde as the starting raw material. Furthermore, 2-methyl-1,8-octanediamine and 1,9-nonanediamine can be obtained through fractionation of the aforementioned diamine crude reaction solution.

The polyamide (A) can be, for example, produced by first collectively adding a diamine and a dicarboxylic acid, and optionally a catalyst or an end capping agent, to produce a nylon salt, and then thermally polymerizing the nylon salt at a temperature of 200 to 250°C to prepare a prepolymer, followed by performing solid phase polymerization, or performing polymerization by using a melt extruder. In the case where the final stage of the polymerization is performed through solid phase polymerization, it is preferred to perform the polymerization under reduced pressure or under an inert gas flow. So long as the polymerization temperature falls within a range of 200 to 280°C, a polymerization rate is large, productivity is excellent, and coloration or gelation can be effectively inhibited. The polymerization temperature in the case of performing the final stage of the polymerization by using a melt extruder is preferably 370°C or lower, and when the polymerization is performed under such a condition, the polyamide which is substantially free from decomposition and less in deterioration is obtained.

Examples of the catalyst which can be used on the occasion of producing the polyamide (A) include phosphoric acid, phosphorous acid, hypophosphorous acid, and a salt or an ester thereof. Examples of the salt or ester include a salt of phosphoric acid, phosphorous acid, or hypophosphorous acid with a metal, such as potassium, sodium, magnesium, vanadium, calcium, zinc, cobalt, manganese, tin, tungsten, germanium, titanium, and antimony; an ammonium salt of phosphoric acid, phosphorous acid, or hypophosphorous acid; an ethyl ester, an isopropyl ester, a butyl ester, a hexyl ester, an isodecyl ester, an octadecyl ester, a decyl ester, a stearyl ester, a phenyl ester, etc. of phosphoric acid, phosphorous acid, or hypophosphorous acid.

A use amount of the catalyst is preferably 0.01% by mass or more, and more preferably 0.05% by mass or more, and it is preferably 1.0% by mass or less, and more preferably 0.5% by mass or less, based on 100% by mass of the total mass of the raw materials. So long as the use amount of the catalyst is the aforementioned lower limit or more, the polymerization proceeds favorably. So long as the use amount of the catalyst is the aforementioned lower limit or less, impurities derived from the catalyst are hardly produced, and for example, in the case of forming the polyamide composition into a film, a fault to be caused due to the aforementioned impurities can be prevented from occurring.

[Inorganic Filler (B)]

The polyamide composition of the present invention contains an inorganic filler (B). In view of the fact that the inorganic filler (B) is contained, a polyamide composition which is more improved in high-temperature strength, heat resistance, and chemical resistance is provided.

The inorganic filler (B) which is contained in the polyamide composition of the present invention is not particularly restricted, known materials can be used within a range where the effects of the present invention are not impaired.

Examples of the inorganic filler (B) include fibrous fillers, such as a glass fiber, a carbon fiber, a calcium silicate fiber, a potassium titanate fiber, and an aluminum borate fiber; a glass flake, talc, kaolin, mica, silicon nitride, hydrotalcite, calcium carbonate, zinc carbonate, titanium oxide, calcium monohydrogen phosphate, wollastonite, silica, zeolite, alumina, boehmite, aluminum hydroxide, calcium silicate, sodium aluminosilicate, magnesium silicate, Ketjen black, acetylene black, furnace black, carbon nanotube, graphite, graphene, brass, copper, silver, aluminum, nickel, iron, calcium fluoride, montmorillonite, swelling fluoromica, and apatite. These inorganic fillers may be used alone or may be used in combination of two or more thereof.

Of the aforementioned inorganic fillers, from the viewpoint that the resulting polyamide composition is excellent in stiffness, etc., at least one selected from the group consisting of a glass fiber, a carbon fiber, a glass flake, talc, kaolin, mica, calcium carbonate, calcium monohydrogen phosphate, wollastonite, silica, carbon nanotube, graphite, calcium fluoride, montmorillonite, swelling fluoromica, and apatite is preferred; at least one selected from the group consisting of a glass fiber, a carbon fiber, wollastonite, and mica is more preferred; and at least one selected from the group consisting of a glass fiber and a carbon fiber is still more preferred.

Although an average fiber diameter of the fibrous filler is typically about 0.5 to 250 pm, from the viewpoint of a favorable contact area with the polyamide (A) and mechanical strength of a molded article, it is preferably 3 to 100 pm, and more preferably 3 to 30 $\mu$m. In addition, though an average fiber length of the fibrous filler is typically about 0.1 to 10 mm, from the viewpoint of high-temperature strength, heat resistance, and mechanical strength of the polyamide composition, it is preferably 0.5 to 6 mm, and more preferably 1 to 6 mm.

The average fiber diameter and the average fiber length of the fibrous filler can be observed and measured with an optical microscope.

A cross-sectional shape of the fibrous filler is not particularly restricted, and it may be either square or circular, and it may also be flat. Examples of the fibrous fiber having a flat cross-sectional shape include a rectangle, an oval close to a rectangle, an ellipse, a cocoon shape, and a cocoon shape in which a central part thereof in the longitudinal direction is constricted.

The inorganic filler may be subjected to a surface treatment with a silane coupling agent, a titanate-based coupling agent, or the like as the need arises. Although the silane coupling agent is not particularly restricted, examples thereof include an aminosilane-based coupling agent, such as $\gamma$-aminopropyltriethoxysilane, $\gamma$-aminopropyltrimethoxysilane, and N-$\beta$-(aminoethyl)-$\gamma$-aminopropylmethyldimethoxysilane; a mercaptosilane-based coupling agent, such as $\gamma$-mercaptopropyltrimethoxysilane and $\gamma$-mercaptopropyltriethoxysilane; an epoxysilane-based coupling agent; and a vinylsilane-based coupling agent. These silane coupling agents may be used alone or may be used in combination of two or more thereof. Of the aforementioned silane coupling agents, an aminosilane-based coupling agent is preferred.

The inorganic filler, preferably the fibrous filler, may be subjected to a treatment with a sizing agent as the need arises. Examples of the sizing agent include a copolymer containing, as structural units, a carboxylic acid anhydride-containing unsaturated vinyl monomer unit and an unsaturated vinyl monomer unit excluding the carboxylic acid anhydride-containing unsaturated vinyl monomer, an epoxy compound, a polyurethane resin, a homopolymer of acrylic acid, a copolymer of acrylic acid with other copolymerizable monomer, and a salt thereof with a primary, secondary, or tertiary amine. These sizing agents may be used alone or may be used in combination of two or more thereof.

The content of the inorganic filler (B) is preferably 0.1 parts by mass or more, more preferably 1 part by mass or more, still more preferably 5 parts by mass or more, and yet still more preferably 10 parts by mass or more based on 100 parts by mass of the polyamide (A) in the polyamide composition, and it may also be 20 parts by mass or more, 30 parts by mass or more, and 40 parts by mass or more. In addition, the content of the inorganic filler (B) is preferably 200 parts by mass or less, more preferably 180 parts by mass or less, still more preferably 160 parts by mass or less, and yet still more preferably 140 parts by mass or less based on 100 parts by mass of the polyamide (A), and it may also be 120 parts by mass or less, and 110 parts by mass or less.

So long as the aforementioned content of the inorganic filler (B) is 0.1 parts by mass or more, excellent high-temperature strength and heat resistance can be readily given to the polyamide composition while revealing the excellent chemical resistance which the polyamide (A) has. In addition, so long as the aforementioned content of the inorganic filler (B) is 200 parts by mass or less, not only the polyamide composition is readily molded into various molded articles, but also it is suitable to provide a molded article having more improved high-temperature strength, heat resistance, and chemical resistance.

A total content of the polyamide (A) and the inorganic filler (B) in the polyamide composition is preferably 85% by mass or more, more preferably 90% by mass or more, and still more preferably 92% by mass or more, and it may also be 95% by mass or more, and 97% by mass or more. In addition, though the total content of the polyamide (A) and the inorganic filler (B) in the polyamide composition may be 100% by mass, taking into consideration the addition amount of other additive as mentioned later, which is added as the need arises, it is preferably less than 100% by mass, and it can also be 99.95% by mass or less, and 99.9% by mass or less.

So long as the total content of the polyamide (A) and the inorganic filler (B) in the polyamide composition falls within the aforementioned range, excellent physical properties of the polyamide composition, such as high-temperature strength, heat resistance, and chemical resistance, are readily revealed.

[Other Additive]

The polyamide composition may contain other additive than the aforementioned polyamide (A) and inorganic filler (B) as the need arises.

Examples of the other additive include a stabilizer, such as a copper component; an antioxidant, such as a hindered phenol-based antioxidant, a hindered amine-based antioxidant, a phosphorus-based antioxidant, and a thio-based antioxidant; a colorant; a UV absorber; a light stabilizer; an antistatic agent; a flame retardant, such as a brominated polymer, antimony oxide, a metal hydroxide, and a phosphinic acid salt; a flame retardant promoter; a crystal nucleating agent; a plasticizer; a lubricating agent; a lubricant; a dispersant; an oxygen absorber; a hydrogen sulfide adsorbent; a crystallization retarder; an organic fibrous filler, such as a wholly aromatic polyamide fiber; and an impact modifier, such as an $\alpha$-olefin-based copolymer and rubber.

Some of the aforementioned inorganic fillers (B) perform a function as a crystal nucleating agent, a colorant, or the like. For example, in the Examples and Comparative Examples as mentioned later, talc performs a function as a crystal nucleating agent, and carbon black performs a function as a colorant.

Although the content of the aforementioned other additive is not particularly limited so long as the effects of the present invention are not impaired, it is preferably 0.02 to 200 parts by mass, and more preferably 0.03 to 100 parts by mass based on 100 parts by mass of the polyamide (A).

As for the polyamide composition of one embodiment of the present invention, a retention of tensile breaking strength when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 60% or more, and more preferably 70% or more on the basis of the tensile breaking strength before the immersion. More specifically, the foregoing retention of tensile breaking strength can be determined by the method described in the section of Examples.

As for the polyamide composition of one embodiment of the present invention, a tensile breaking strength at 23°C on the occasion of injection molding into a 4 mm-thick test specimen is preferably 200 MPa or more, more preferably 210 MPa or more, and still more preferably 220 MPa or more. In addition, a tensile breaking strength (high-temperature strength) at 120°C is preferably 120 MPa or more, and more preferably 130 MPa or more, and it may also be 140 MPa or more. Specifically, the foregoing tensile breaking strength can be determined by the method described in the section of Examples.

As for the polyamide composition of one embodiment of the present invention, a heat distortion temperature on the occasion of injection molding into a 4 mm-thick test specimen is preferably 270°C or higher, more preferably 280°C or higher, and still more preferably 285°C or higher. Specifically, the foregoing heat distortion temperature can be determined by the method described in the section of Examples.

As for the polyamide composition of one embodiment of the present invention, a coefficient of water absorption when injection molding into a 4 mm-thick test specimen and then immersing this in water at 23°C for 168 hours is preferably 0.3% or less, and more preferably 0.2% or less on the basis of the weight of the test specimen before the immersion. More specifically, the foregoing coefficient of water absorption can be determined by the method described in the section of Examples.

[Production Method of Polyamide Composition]

A production method of the polyamide composition is not particularly restricted, and a method in which the polyamide (A), the inorganic filler (B), and the aforementioned other additive which is added as the need arises, and so on are able to be uniformly mixed can be preferably adopted. As for mixing, typically, a method of undergoing melt kneading by using a single-screw extruder, a twin-screw extruder, a kneader, a Banbury mixer, or the like is preferably adopted. Although a melt kneading condition is not particularly limited, examples thereof include a method in which melt kneading is performed in a temperature range of about 10 to 50°C higher than a melting point of the polyamide (A) for about 1 to 30 minutes.

<Molded Article>

(Molding Method)

A molded article made of the polyamide composition of the present invention can be obtained by performing molding by using the polyamide composition through various molding methods, such as an injection molding method, a blow molding method, an extrusion molding method, a compression molding method, a stretch molding method, a vacuum molding method, a foam molding method, a rotation molding method, an impregnation method, a laser sintering method, and a fused deposition modeling method. Furthermore, a molded article can be obtained by subjecting the polyamide composition of the present invention to composite molding with other polymer or the like.

(Application)

Examples of the aforementioned molded article include films, sheets, tubes, pipes, gears, cams, various housings, rollers, impellers, bearing retainers, seal rings, spring holders, clutch parts, chain tensioners, tanks, wheels, connectors, switches, sensors, sockets, capacitors, hard disk components, jacks, fuse holders, relays, coil bobbins, resistors, IC housings, and LED reflectors.

In particular, the polyamide composition of the present invention is suitable as an injection-molded member, a heat-resistant film, a tube for transporting various chemicals/liquid medicines, an intake pipe, a blow-by tube, and a substrate for a 3D printer, and so on, which are required to have high-temperature characteristics and chemical resistance. In addition, it can be suitably used as molded articles for automobiles where high heat resistance and chemical resistance are required, for example, interior and exterior parts of automobiles, parts in engine rooms, cooling system parts, sliding parts, electrical parts, etc. In addition to the above, the polyamide composition of the present invention can be used as an electric component/electronic component or a molded article requiring heat resistance adapting to a surface mounting process. Such molded articles can be suitably used for surface mounting components of electrical/electronic components, surface mount connectors, sockets, camera modules, power supply components, switches, sensors, capacitor seats, hard disk components, relays, resistors, fuse holders, coil bobbins, IC housings, and so on.

Examples

The present invention is hereunder described more specifically by reference to Examples and Comparative Examples, but it should be construed that the present invention is not limited thereto.

Respective evaluations in the Production Examples, Examples, and Comparative Examples were performed according to the methods described below.

Inherent viscosity

With respect to polyamides (samples) obtained in the Production Examples, the inherent viscosity (dL/g) as measured by using concentrated sulfuric acid as a solvent in a concentration of 0.2 g/dL at a temperature of 30°C was determined according to the following relational expression.

$$\eta_{inh} = [\ln(t_1/t_0)]/c$$

In the aforementioned relational expression, $\eta_{inh}$ represents an inherent viscosity (dL/g); $t_0$ represents a time of flow (sec) of the solvent (concentrated sulfuric acid); $t_1$ represents a time of flow (sec) of the sample solution; and c represents a sample concentration (g/dL) in the sample solution (namely, 0.2 g/dL).

• Melting point and glass transition temperature

The melting point and the glass transition of each of polyamides obtained in the Production Examples were measured using a differential scanning calorimetry analyzer "DSC7020", manufactured by Hitachi High-Tech Science Corporation.

The melting point was measured in conformity with ISO11357-3 (2011, Second Edition). Specifically, the sample (polyamide) was heated from 30°C to 340°C at a rate of 10°C/min in a nitrogen atmosphere and kept at 340°C for 5 minutes, thereby completely melting the sample. Thereafter, the resulting sample was cooled to 50°C at a rate of 10°C/min and kept at 50°C for 5 minutes. A peak temperature of a melt peak appearing when the sample was again subjected to temperature rise to 340°C at a rate of 10°C/min was defined as the melting point (°C), and in the case where plural melt peaks appeared, a peak temperature of the melt peak at the highest temperature side was defined as the melting point (°C).

The glass transition temperature (°C) was measured in conformity with ISO11357-2 (2013, Second Edition). Specifically, the sample (polyamide) was heated from 30°C to 340°C at a rate of 20°C/min in a nitrogen atmosphere and kept at 340°C for 5 minutes, thereby completely melting the sample. Thereafter, the resulting sample was cooled to 50°C at a rate of 20°C/min and kept at 50°C for 5 minutes. A temperature of an inflection point appearing when the sample was again subjected to temperature rise to 200°C at a rate of 20°C/min was defined as the glass transition temperature (°C).

«Preparation of Test specimen»

Using an injection molding machine, manufactured by Sumitomo Heavy Industries, Ltd. (clamping force: 100 tons, screw diameter: ϕ32 mm), with respect to each of the polyamide compositions obtained in the Examples and Comparative Examples, a cylinder temperature of 20 to 30°C higher than the melting point of the polyamide was set, and the polyamide composition was molded using a T-runner mold under a condition of a mold temperature of 160°C for the polyamide compositions of Examples 1 to 4 and Comparative Examples 1 and 2 and under a condition of a mold temperature of 140°C for the polyamide compositions of Comparative Examples 3 to 5, respectively, thereby preparing a multi-purpose test specimen Type A1 (dumbbell type test specimen described in JIS K7139: 4 mm in thickness, 170 mm in total length, 80 mm in parallel length, 10 mm in parallel width).

• Retention of tensile strength (chemical resistance)

Using the multi-purpose test specimen Type A1 (4 mm in thickness) prepared in the aforementioned method, a tensile test was performed at 23°C in conformity with ISO527-1 (2012, Second Edition), and a tensile breaking strength was calculated according to the following expression (1). This value was defined as an initial tensile breaking strength (a).

$$\text{Tensile breaking strength (MPa)} = [\text{Stress at break (N)}]/[\text{Cross-sectional area of test specimen (mm}^2)] \quad (1)$$

The test specimen prepared in the aforementioned method was immersed in an antifreeze (an aqueous solution obtained by two fold dilution of "SUPER LONGLIFE COOLANT" (Pink), manufactured by Toyota Motor Corporation) in a pressure resistant vessel, and the pressure resistance vessel was allowed to stand in a thermostat ("DE-303", manufactured by Mita Sangyo Co., Ltd.) set at 130°C for 500 hours. After elapsing 500 hours, the test specimen discharged from the thermostat was subjected to a tensile test in the same method as mentioned above, thereby measuring a tensile breaking strength (b) of the test specimen after heating.

The retention of tensile strength was determined according to the following expression (2), thereby evaluating the chemical resistance.

$$\text{Retention of tensile strength (\%)} = \{(b)/(a)\} \times 100 \quad (2)$$

• Tensile breaking strength

Using the multi-purpose test specimen Type A1 (4 mm in thickness) prepared in the aforementioned method, the tensile breaking strength (MPa) at 23°C was measured with an autograph (manufactured by Shimadzu Corporation) in conformity with ISO527-1 (2012, Second Edition).

• Heat distortion temperature

A test specimen (4 mm in thickness, 80 mm in total length, 10 mm in width) was prepared by cutting from the multi-purpose test specimen Type A1 (4 mm in thickness) prepared in the aforementioned method and measured for the heat distortion temperature (°C) by using an HDT tester "S-3M", manufactured by Toyo Seiki Seisaku-sho, Ltd. in conformity with ISO75 (2013, Third Edition).

• Coefficient of water absorption

The multi-purpose test specimen Type A1 (4 mm in thickness) prepared in the aforementioned method was weighed. Subsequently, the test specimen was immersed in water to perform an immersion treatment at 23°C for 168 hours and then again weighed, thereby determining a weight increase. This was divided by the weight before the immersion, thereby determining the coefficient of water absorption (%).

• High-temperature strength

Using the multi-purpose test specimen Type A1 (4 mm in thickness) prepared in the aforementioned method, the tensile breaking strength (MPa) at 120°C was measured using an autograph (manufactured by Shimadzu Corporation) and a thermostat (manufactured by Kato K.K.) set at 120°C in conformity with ISO527-1 (2012, Second Edition).

The respective components used for preparing the polyamide compositions in the Examples and Comparative Examples are shown.

EP 3 842 497 A1

«Polyamide»

[Production Example 1]

• Production of semi-aromatic polyamide (PA9N-1)

An autoclave having an internal volume of 40 liters was charged with 9,184.6 g (42.48 mols) of 2,6-naphthalenedicarboxylic acid, 6,840.1 g (43.22 mols) of a mixture of 1,9-nonanediamine and 2-methyl-1,8-octanediamine [former/latter = 4/96 (molar ratio)], 126.0 g (1.03 mols) of benzoic acid, 16.2 g (0.1% by mass relative to the total mass of the raw materials) of sodium hypophosphite monohydrate, and 7.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N-1".

[Production Example 2]

• Production of semi-aromatic polyamide (PA9N-1B)

A polyamide was obtained in the same manner as in Production Example 1, except for using, as the raw materials, 9,175.3 g (42.44 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 136.5 g (1.12 mols) of benzoic acid, and 16.2 g (0.1% by mass relative to the total mass of the raw materials) of sodium hypophosphite monohydrate. This polyamide is abbreviated as "PA9N-1B".

[Production Example 3]

• Production of semi-aromatic polyamide (PA9N-2)

A polyamide was obtained in the same manner as in Production Example 1, except for using, as the raw materials, 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 15/85 (molar ratio)], 210.0 g (1.72 mols) of benzoic acid, and 16.2 g (0.1% by mass relative to the total mass of the raw materials) of sodium hypophosphite monohydrate. This polyamide is abbreviated as "PA9N-2".

[Production Example 4]

• Production of semi-aromatic polyamide (PA9N-3)

A polyamide was obtained in the same manner as in Production Example 1, except for using, as the raw materials, 9,379.2 g (43.38 mols) of 2,6-naphthalenedicarboxylic acid, 6,999.1 g (44.22 mols) of a mixture of 1,9-nonanediamine and 2-methyl-1,8-octanediamine [former/latter = 85/15 (molar ratio)], 150.5 g (1.23 mols) of benzoic acid, and 16.5 g (0.1% by mass relative to the total mass of the raw materials) of sodium hypophosphite monohydrate. This polyamide is abbreviated as "PA9N-3".

[Production Example 5]

• Production of semi-aromatic polyamide (PA9T-1)

An autoclave having an internal volume of 40 liters was charged with 8,190.7 g (49.30 mols) of terephthalic acid, 7,969.4 g (50.35 mols) of a mixture of 1,9-nonanediamine and 2-methyl-1,8-octanediamine [former/latter = 4/96 (molar ratio)], 171.0 g (1.40 mols) of benzoic acid, 16.3 g (0.1% by mass relative to the total mass of the raw materials) of sodium hypophosphite monohydrate, and 5.5 liters of distilled water, and then, the same procedures as in Production Example 1 were followed, to obtain a polyamide. This polyamide is abbreviated as "PA9T-1".

[Production Example 6]

• Production of semi-aromatic polyamide (PA9T-2)

A polyamide was obtained in the same manner as in Production Example 5, except for using a mixture of 1,9-nonanediamine and 2-methyl-1,8-octanediamine [former/latter = 80/20 (molar ratio)]. This polyamide is abbreviated as "PA9T-2".

«Inorganic Filler»

• Glass fiber

"CS03JA-FT2A", manufactured by Owens Corning Japan LLC. (average fiber diameter: 10.5 $\mu$m, average fiber length: 3 mm, cross-sectional shape: circle)

• Carbon fiber

"PYROFIL TR06NLB6R", manufactured by Mitsubishi Chemical Corporation (average fiber diameter: 6 $\mu$m, average fiber length: 6 mm, cross-sectional shape: circle)

«Other Additives»

• Talc (functioning as a crystal nucleating agent)

"TALC ML112", manufactured by Fuji Talc Industrial Co., Ltd.

• Carbon black (functioning as a colorant)

"#980B", manufactured by Mitsubishi Chemical Corporation

• Antioxidant (1)

"SUMILIZER GA-80", manufactured by Sumitomo Chemical Co., Ltd.

• Antioxidant (2)

"KG HS-01P", manufactured by PolyAd Services Inc.

• Lubricant

"LICOWAX OP", manufactured by Clariant Chemicals Ltd.

• Crystallization retarder

"NUBIAN BLACK TH-827K", manufactured by Orient Chemical Industries, Co., Ltd.

[Examples 1 to 4 and Comparative Examples 1 to 5]

The respective components other than the glass fiber and the carbon fiber were previously mixed in a proportion shown in Table 1 and fed from an upstream hopper of a twin-screw extruder ("TEM-26SS", manufactured by Toshiba Machine Co., Ltd.). In the case of using the glass fiber and the carbon fiber, the glass fiber and the carbon fiber were fed in a proportion shown in Table 1 from a side feed port on a downstream side of the extruder. The mixture was melt-kneaded and extruded at a cylinder temperature of 20 to 30°C higher than the melting point of the polyamide, followed by cooling and cutting. There was thus produced a polyamide composition in a pellet form.

Using the polyamide compositions obtained in the aforementioned Examples and Comparative Examples, the aforementioned respective physical properties evaluations were performed. The results are shown in Table 1.

In Table 1, C9DA expresses the 1,9-nonanediamine unit, and MC8DA expresses the 2-methyl-1,8-octanediamine unit.

Table 1

| | | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|---|
| Polyamide composition | Polyamide (A) | PA9N-1 (C9DA/MC8DA = 4/96) | Parts by mass | 100 | | | | | | | | |
| | | PA9N-1B (C9DA/MC8DA = 4/96) | Parts by mass | | 100 | 100 | | 100 | | | | |
| | | PA9N-2 (C9DA/MC8DA= 15/85) | Parts by mass | | | | 100 | | | | | |
| | | PA9N-3 (C9DA/MC8DA = 85115) | Parts by mass | | | | | | 100 | | | |
| | | PA9T-1] (C9DA/MC8DA = 4/96) | Parts by mass | | | | | | | 100 | | |
| | | PA9T-2 (C9DA/MC8DA = 80/20) | Parts by mass | | | | | | | | 100 | 100 |
| | Inorganic filler (B) | Glass fiber | Parts by mass | 54 | 100 | | 54 | | 54 | 54 | 54 | |
| | | Carbon fiber | Parts by mass | | | 43 | | | | | | 43 |

| | | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|---|
| | Other additives | Talc (crystal nucleating agent) | Parts by mass | 0.1 | 0.1 | 0.1 | 0.1 | 0.1 | 0.1 | 0.1 | 0.1 | 0.1 |
| | | Carbon black (colorant) | Parts by mass | 0.2 | 0.2 | 0.2 | 0.2 | | 0.2 | 0.2 | 0.2 | 0.2 |
| | | Antioxidant (1) | Parts by mass | 0.2 | | | 0.2 | 0.2 | 0.2 | 0.2 | 0.2 | |
| | | Antioxidant (2) | Parts by mass | | 0.8 | 0.8 | | | | | | 0.8 |
| | | Lubricant | Parts by mass | 0.3 | 0.2 | 0.2 | 0.3 | 0.2 | 0.3 | 0.3 | 0.3 | 0.2 |
| | | Crystallization retarder | Parts by mass | | 1.0 | | | | | | | |
| Evaluation of physical properties of polyamide | | Inherent viscosity | dL/g | 1.20 | 1.23 | 1.23 | 1.05 | 1.23 | 1.22 | 1.00 | 1.21 | 1.20 |
| | | Melting point | °C | 317 | 317 | 317 | 314 | 317 | 294 | 283 | 300 | 300 |
| | | Glass transition temperature | °C | 140 | 140 | 140 | 140 | 140 | 136 | 123 | 120 | 120 |

| | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Evaluation of physical properties of polyamide composition | Chemical resistance (at 130°C for 500 hours) | % | 81 | 71 | 91 | 79 | 88 | 75 | 69 | 81 | 72 |
| | Tensile breaking strength | MPa | 220 | 235 | 248 | 226 | 99 | 222 | 209 | 200 | 250 |
| | Heat distortion temperature | °C | 288 | 293 | 292 | 286 | 156 | 272 | 263 | 270 | 280 |
| | Coefficient of water absorption (at 23°C for 168 hours) | % | 0.19 | 0.11 | 0.18 | 0.17 | 0.27 | 0.20 | 0.22 | 0.24 | 0.24 |
| | High-temperature strength (at 120°C) | MPa | 131 | 161 | 164 | 149 | 58 | 133 | 117 | 117 | 138 |

It is noted from Table 1 that as for the polyamide compositions of Examples 1 to 4, the retention of tensile strength after immersion in antifreeze is high as 70%, and in particular, in Examples 1, 3, and 4, it is 79% or more, and thus, the chemical resistance is more improved. Furthermore, it is noted that the polyamide compositions of Examples 1 to 4 have excellent high-temperature strength and heat resistance.

In addition, the polyamide compositions of Examples 1 to 4 are equal to or more excellent than those of Comparative Examples 1 to 5 in terms of evaluation regarding the tensile breaking strength and the coefficient of water absorption, and therefore, it is noted that the polyamide composition of the present invention is also excellent in the mechanical characteristics and the low water-absorbing properties.

As described in PTL 1, it is known that when an aliphatic diamine having a side chain is used, the crystallinity of the resulting polyamide is lowered, and such is not preferred from the standpoint of heat resistance, chemical resistance, etc. In contrast, in view of the fact that as for the polyamide composition of the present invention, the polyamide (A) to be contained therein has a specified constitution having a dicarboxylic acid unit composed mainly of a naphthalenedicarboxylic acid unit and a diamine unit composed mainly of a branched aliphatic diamine unit, the chemical resistance is more improved, and in addition thereto, the polyamide composition of the present invention is more excellent in various physical properties including high-temperature strength, heat resistance, mechanical characteristics, and low water-absorbing properties.

**Claims**

1. A polyamide composition comprising a polyamide (A) having a dicarboxylic acid unit and a diamine unit and an inorganic filler (B), wherein
more than 40 mol% and 100 mol% or less of the dicarboxylic acid unit is a naphthalenedicarboxylic acid unit; and
60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.

2. The polyamide composition according to claim 1, wherein the proportion of the branched aliphatic diamine unit relative to the total 100 mol% of the branched aliphatic diamine unit and the linear aliphatic diamine unit is 60 mol% or more and 99 mol% or less.

3. The polyamide composition according to claim 1, wherein the proportion of the branched aliphatic diamine unit relative to the total 100 mol% of the branched aliphatic diamine unit and the linear aliphatic diamine unit is 80 mol% or more and 99 mol% or less.

4. The polyamide composition according to any one of claims 1 to 3, wherein the carbon number of the branched aliphatic diamine unit is 4 or more and 18 or less.

5. The polyamide composition according to any one of claims 1 to 4, wherein the branched aliphatic diamine unit is a structural unit derived from a diamine having at least one selected from the group consisting of a methyl group and an ethyl group as the branched chain.

6. The polyamide composition according to any one of claims 1 to 5, wherein when the carbon atom to which arbitrary one of the amino groups is bound is designated as the 1-position, the branched aliphatic diamine unit is a structural unit derived from a diamine having at least one of the branched chains on at least one of the carbon atom at the 2-position and the carbon atom at the 3-position.

7. The polyamide composition according to any one of claims 1 to 3, wherein the branched aliphatic diamine unit is a structural unit derived from at least one diamine selected from the group consisting of 2-methyl-1,5-pentanediamine, 3-methyl-1,5-pentanediamine, 2-methyl-1,8-octanediamine, and 2-methyl-1,9-nonanediamine.

8. The polyamide composition according to any one of claims 1 to 7, wherein the carbon number of the linear aliphatic diamine unit is 4 or more and 18 or less.

9. The polyamide composition according to any one of claims 1 to 7, wherein the linear aliphatic diamine unit is a structural unit derived from at least one diamine selected from the group consisting of 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine.

10. The polyamide composition according to any one of claims 1 to 9, wherein the content of the inorganic filler (B) is 0.1 parts by mass or more and 200 parts by mass or less based on 100 parts by mass of the polyamide (A).

11. The polyamide composition according to any one of claims 1 to 10, wherein the inorganic filler (B) is at least one selected from the group consisting of a glass fiber, a carbon fiber, wollastonite, and mica.

12. A molded article comprising the polyamide composition according to any one of claims 1 to 11.

13. The molded article according to claim 12, which is a film.

[Fig. 1]

## INTERNATIONAL SEARCH REPORT

| International application No. |
| --- |
| PCT/JP2019/033004 |

**A. CLASSIFICATION OF SUBJECT MATTER**
Int.Cl.  C08L77/06(2006.01)i, C08G69/26(2006.01)i, C08K3/013(2018.01)i,
         C08K3/34(2006.01)i, C08K7/06(2006.01)i, C08K7/14(2006.01)i

According to International Patent Classification (IPC) or to both national classification and IPC

**B. FIELDS SEARCHED**

Minimum documentation searched (classification system followed by classification symbols)
Int.Cl.  C08L77/06, C08G69/26, C08K3/013, C08K3/34, C08K7/06, C08K7/14

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-179434 A (UBE INDUSTRIES, LTD.) 07 July 2005 claims 1, 3-6, paragraphs [0009]-[0015], [0025]-[0026], [0041]-[0046] (Family: none) | 1-13 |
| A | JP 2005-178078 A (UBE INDUSTRIES, LTD.) 07 July 2005 claims 1, 3, paragraphs [0043]-[0046], [0060]-[0061], [0088]-[0089] & US 2007/0104907 A1, claims 1, 5, paragraphs [0048]-[0050], [0066]-[0067], [0098]-[0101] & WO 2005/058600 A1 & EP 1695817 A1 & CN 1894100 A | 1-13 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 October 2019 (11.10.2019) | 21 October 2019 (21.10.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

| | International application No. |
|---|---|
| | PCT/JP2019/033004 |

### C (Continuation). DOCUMENTS CONSIDERED TO BE RELEVANT

| Category* | Citation of document, with indication, where appropriate, of the relevant passages | Relevant to claim No. |
|---|---|---|
| A | JP 49-026958 B1 (TEIJIN LTD.) 13 July 1974 page 1, left column, line 16 to page 1, right column, line 31 (Family: none) | 1-13 |
| A | JP 2005-132941 A (KURARAY CO., LTD.) 26 May 2005 claims 1-2, paragraph [0054] (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50067393 A
- JP 9012715 A
- WO 2012098840 A
- WO 2005102681 A
- JP 7228690 A